# EUROPEAN PATENT SPECIFICATION

(11) **EP 4 468 827 B1**
(45) Date of publication and mention of the grant of the patent: **02.12.2026**
(21) Application number: 24178257.2
(22) Date of filing: 27.05.2024
(51) Int. Cl.: H05B 47/105, H05B 47/175

(54) **SYSTEM AND METHOD OF DYNAMICALLY CONTROLLING INFRASTRUCTURE ILLUMINATION**
SYSTEM UND VERFAHREN ZUR DYNAMISCHEN STEUERUNG DER INFRASTRUKTURBELEUCHTUNG
SYSTÈME ET PROCÉDÉ DE COMMANDE DYNAMIQUE D'ÉCLAIRAGE D'INFRASTRUCTURE

(30) Priority: 26.05.2023 AU 2023901655
(43) Date of publication of application: 27.11.2024
(73) Proprietor: Felicity Smart Infrastructure Pty Ltd, Avalon Beach NSW 2107 (AU)
(72) Inventor: COWAN, Sean Francis, Bilgola Plateau, NSW 2107 (AU); NIELSEN, Martin Kent Gyldholm, 4000 Roskilde (DK); TOFANELLI, Valerio, 2500 Valby (DK)
(74) Representative: Cristinelli, Luca

(56) References cited:
- WO-A1-2021/255277
- US-A1- 2016 050 397
- US-A1- 2018 247 530

## Description

### FIELD OF THE INVENTION

The present invention relates to a computer-implemented system and method of dynamically controlling the illumination of a section of infrastructure (eg. road, street, footpath, bikeway, railway, freeway, highway, etc.) according to real-time traffic intensity. In particular, the present invention utilizes a predetermined traffic intensity associated with the section of infrastructure as a reference parameter for determining a relative traffic intensity associated with a recent measurement of traffic intensity, and on that basis, a light management system is operated to adjust illumination of lighting devices associated with connected sections of infrastructure in substantially real-time.

### BACKGROUND OF THE INVENTION

Over the past approximately fifteen (15) years, public infrastructure lighting and in particular lamps and luminaires utilized therein have incorporated Light-Emitting Diode (LED) technology.

Conserving energy to address environmental impact in respect of the illumination of such infrastructure presents challenges due to the need to simultaneously ensure public safety in view of *ad hoc* presence of pedestrian and/or vehicular traffic. In the example of a section of road, when there are a limited number of vehicles or pedestrians (or possibly none) within range of a particular lighting device, there should be no reason (other than if stipulated by the relevant regulatory body in the jurisdiction) for the light to be illuminated at full brightness, since this represents an inefficient use of energy. Further, depending upon the type of lighting device, constant illumination is also likely to give rise to adverse environmental effects including possibly increased levels of greenhouse gas emissions and the increased usage of the available life of the device thereby requiring earlier replacement. For these reasons, there is a need for a light management system (responsible for controlling the illumination output of one or more illumination devices) according to the level of pedestrian and/or vehicular traffic detected within range of the light(s) in substantially real-time.

Sections of road typically have allocated to them a lighting class established according to an estimated traffic intensity applicable to the road. A street light management system will typically either maintain a constant illumination output of the street lights based on the lighting class or adjust the level of illumination at predetermined scheduled times without regard to the actual traffic intensity or observable use of the road at any particular point in time.

There are various ways in which a lighting class is selected for a particular road. In one example, the selection of a lighting class is based upon a maximum intensity of traffic expected along the road (ie. a theoretical value that is foreseen by a designer such as a traffic engineer responsible for establishing the lighting class based on the recorded road traffic data at specific periods of time or solely based upon a theoretical analysis). Accordingly, the level of illumination of lighting devices associated with different traffic network sections is controlled based on the particular lighting class(es) allocated thereto and hence does not take into account how the intensity of traffic may change over time. In other words, known systems for controlling road illumination rely upon theoretical (often inaccurate and at times unsafe) design values rather than by direct and real-time determination of relevant parameters.

In one particular example, a highway may be allocated a lighting class of "Category 1" representing a passage that comprises substantial risk and hence requiring the brightest lighting class, and an arterial road connected to the highway may be allocated a reduced illumination lighting class of "Category 3" representing a road considered less risky based on an expectation that there will be reduced traffic through the arterial road. The Category 1 lighting class may require a minimum level of luminosity (for a maximum volume of traffic) to be maintained at, for example, 142W, whereas a Category 2 or 3 lighting class may require a minimum level luminosity (for a maximum volume of traffic) to be maintained at, for example, 60W or lower. However, the illumination output is static, meaning that over a particular time period in which the street lights are operational (eg. approximately from 8:00pm to 6:00am) the illumination output of the street lights will not change from the values above since they are controlled to maintain the predetermined illumination output selected according to the lighting class of the road.

In the above example, static LED streetlights having an on/off switch could be used, where at 8:00pm the streetlights are switched on at the particular luminosity assigned to the category of lighting, and at 6:00am the streetlights are switched off. However, more typically, a Lighting Control Unit (LCU) is affixed to the street light(s) at the time of installation or retrofitting of the LED luminaire that allows for illumination output of the street light(s) to be reduced or increased. For example, an LCU provides a range of increased functionality for an LED luminaire an LCU is attached to, including scheduled time-based dimming of the connected luminaire(s), the ability to individually meter the electrical power consumption with respect to one or more luminaires, the provision of general alerts and alarms (including tilt alarms and alerts regarding the possibility of damage with respect to luminaires), and malfunction alerts with respect to the luminaire(s) which ensure that "flickering" or a range of other malfunctions that may arise are alerted to maintenance crew.

An LCU is typically connected to a Control Management System (CMS) that receives data transmitted by the installed LCU and providing users with the ability to visualize (and in some cases manipulate) the functional aspects of the LCU. An LCU may connect with a CMS in a number of different ways, including by way of long range, low power connectivity such as Lorawan or similar technology, using a "meshed" system where there is localized connectivity amongst a grouping of LCUs to a central point of connectivity within a geo-located zone (where the central point communicates data through ethernet or cellular connectivity to the CMS), and cellular connectivity wherein each LCU is connected to the CMS independently using a range of telecommunications protocols such as Cat-M, LTE-M, NBioT, etc.

Reducing or increasing the illumination of the LED luminaire(s) using an LCU will typically occur at pre-set times during the night, meaning that over a particular time period in which the street lights are operational (eg. approximately 8:00pm to 6:00am) the illumination output of the street light(s) will change. In the example provided above involving a highway and arterial road, the change could be from the output values stated to another predetermined illumination output which has been selected for predetermined periods throughout the night (eg. according to a fixed timing schedule). However, such changes occur irrespective of the actual traffic intensity or observable use of the road at any particular point in time. Therefore, even with the use of LCUs, existing streetlight CMSs to which LCUs are connected have the potential to be unsafe since there is no regard in relation to any adverse public safety issues and the illumination output is not correlated with any observable or measurable parameter but rather arbitrary pre-set values.

There are several problems associated with operating lighting devices for sections of infrastructure in the manner described above. For reasons already described, this type of lighting management does not represent the most energy efficient and environmentally friendly solution since there are times at which the lighting devices need not be operational or at least need not be operated at their illumination outputs required by the designated lighting class.

By operating lighting devices in this manner, there can also be adverse safety implications. In an example, if the highway that comprises street lights which operate according to a Category 1 lighting class is undergoing road works at night, and a detour is created through the arterial road having street lights operating according to a Category 3 lighting class, drivers forced to detour through the arterial road will be forced to commute along a section of road that is insufficiently illuminated based on the actual traffic volume at the time (irrespective of whether the illumination on the Category 3 road is adjusted at pre-set times during the night). This may represent a danger to drivers whose ability to view other vehicles, road signs, street markings, obstructions, etc, is likely to be impaired in view of insufficient lighting according to prevailing traffic conditions.

There is also a need to be able to control any given CMS irrespective of the type of connectivity that exists between LCUs (which are affixed to street lights) and the CMS, including each of the connectivity examples described above.

Accordingly, there exists a need for a system and method for controlling the operation of infrastructure lighting devices in a manner that addresses, or at least ameliorates, some of the abovementioned problems.

The reference to any prior art in this specification is not, and should not be taken as, an acknowledgement or any suggestion, that the prior art forms part of the common general knowledge.

US 2016/050397 A1 relates to a system characterized by a distributed network of smart optical sensors for adaptive, predictive, and on-demand control of public lighting. However, the aforementioned problems remain unsolved.

US 2018/247530 A1 shows a method according to the preamble of claim 1.

### SUMMARY OF THE INVENTION

The invention is set out in the appended set of claims.

In one aspect, the present invention provides a computer-implemented method of dynamically controlling infrastructure illumination, the method including receiving, by one or more processors, traffic intensity data and determining traffic intensity recorded at a particular section of infrastructure in substantially real-time, processing, by one or more processors, the received traffic intensity data by comparing the substantially real-time traffic intensity recorded at the particular section of infrastructure with a predetermined traffic intensity for the particular section of infrastructure to determine a relative traffic intensity, and operating, by one or more processors, a light management system operable to control the illumination of one or more lighting devices substantially in real-time to adjust illumination of the one or more lighting devices according to the relative traffic intensity.

It will be appreciated that by adjusting an existing illumination of the one or more lighting devices according to determined relative traffic intensity, the illumination of the lighting devices at any point in time will be based on the actual traffic intensity (or observable / measured use of the road). The adjustment to the illumination level of the lighting device(s) may be in accordance with any particular proportion considered safe (by a regulatory body or similar authority).

In an embodiment, controlling the light management system in substantially real-time includes creating one or more commands to increase or decrease illumination and transmit same to the light management system substantially in real-time.

In an embodiment, the method further includes:
receiving, by one or more processors, data from one or more additional sources, wherein operating the light management system to adjust illumination of the one or more lighting devices is based on the determined relative traffic intensity and the data from one or more additional sources.

In an embodiment, the data from the one or more additional sources includes data relating to one or more of commands received from user device(s), the dispatching of emergency vehicles, environmental monitoring sensor data, and or expected astronomical factors.

In an embodiment, the command received from a user device includes instructions from the user to provide illumination (eg. full or minimum illumination) along an anticipated path of travel of the user such that personalized control of lighting infrastructure is provided to the user which may be in exchange for a fee.

In another embodiment, the command received from a user device includes instructions from a user associated with an emergency and/or maintenance vehicle seeking illumination from their current location to an intended destination or along an anticipated path of travel of the emergency and/or maintenance vehicle.

In these embodiments, the anticipated path of travel may be one or more of a path of travel that is pre-specified by the user, or a path of travel determined in substantially real-time according to the real-time tracking of the geo-location of the user device and/or a vehicle in which the user is travelling.

In an embodiment, the data relating to the dispatching of emergency vehicles includes information relating to an anticipated path of travel of an emergency or similar vehicle (eg. ambulance, police car, etc). In an example, the public lighting infrastructure along the expected path of a dispatched emergency vehicle would be caused to be fully illuminated (without any dimming), thereby ensuring maximum luminosity along the path travelled by the emergency vehicle.

In an embodiment, the environmental monitoring sensor data may include information relating to climate warnings and/or predictions that may affect general visibility including storms, fog, heavy rain, hail, etc. In an example, the affected public lighting infrastructure would have its luminosity adjusted for the period of time for which the climatic factor is expected to prevail.

In an embodiment, the data relating to expected astronomical factors include astronomical factors such as moon brightness, solar eclipses, etc, that may affect general illumination and visibility. In an example, the affected public lighting infrastructure would have its luminosity adjusted for the period of time during which the astronomical factors are expected to prevail.

The present invention contemplates two primary methods of processing received traffic intensity data to determine the relative traffic intensity. In a first embodiment, the method includes receiving, by one or more processors, a maximum luminosity value allocated to the one or more lighting devices configured to illuminate the particular section of infrastructure based on traffic intensity, wherein said predetermined traffic intensity is the traffic intensity upon which the maximum luminosity value is based.

In a second embodiment, the method includes determining, by one or more processors, a maximum traffic intensity recorded at the particular section of infrastructure during a particular time period of a plurality of historical time periods, wherein said predetermined traffic intensity is the maximum traffic intensity.

In any one of the first and second embodiments, the traffic intensity data identifies a plurality of measurements of traffic intensity captured during a recent time period.

In any one of the first and second embodiments, the recent time period is defined by a predetermined time interval (eg. a 15 minute time period).

In any one of the first and second embodiments, processing the received traffic intensity data further includes aggregating the plurality of measurements of traffic intensity captured during the recent time period. For example, during a 15 minute time period, there may be a plurality of measurements captured with respect to traffic intensity, and the plurality of measurements may be aggregated into a single measurement of traffic intensity.

In the first embodiment described above, the relative traffic intensity for the recent time period is a percentage of the traffic intensity upon which the maximum luminosity value is based.

In the second embodiment described above, the relative traffic intensity for the recent time period is a percentage of the recorded maximum traffic intensity.

In the first embodiment described above, the maximum luminosity value allocated to the one or more lighting devices is based upon a regulatory requirement applicable to the particular section of infrastructure for a particular interval of time.

In a practical example relating to the first embodiment, for a particular interval of time (eg. 8:00pm to 6:00am), the maximum luminosity value allocated to the one or more lighting devices by a regulatory body may be 70% of the maximum possible output luminosity of the one or more lighting devices. This maximum luminosity value may be based on a pre-defined traffic intensity of 6 vehicles (for example) passing through the particular section of infrastructure over 15 minute time intervals. If a relative traffic intensity for a recent 15 minute time period is determined to be 3 vehicles (ie. 50% relative traffic intensity), then the one or more lighting devices may be controlled to output 35% of their maximum luminosity (ie. 50% of the maximum 70% luminosity that is possible from the lighting devices based on regulatory requirements) with the adjustments to luminosity occurring substantially in real-time.

Similarly, if relative traffic intensity for a subsequent 15 minute time period is determined to be 6 vehicles (ie. 100% relative traffic intensity), then the luminosity of the one or more lighting devices may be increased from 35% back to 70% (ie. back to 100% of the maximum 70% luminosity possible from the lighting devices based on regulatory requirements). In this way, the maximum luminosity established by a regulatory body is always maintained during the highest volumes of traffic and hence will comply with regulatory requirements. Further, the lighting devices may be dimmed relative to the maximum luminosity according to the actual observable traffic intensity representing less than 100% of the traffic intensity at any point in time.

In a practical example relating to the second embodiment described above, the maximum traffic intensity recorded at the particular section of infrastructure during a particular time period (eg. a previous 15 minute time period during which traffic intensity was monitored) may be 73 cars with 1 pedestrian (ie. aggregated traffic volume of 74). Any subsequently recorded traffic intensities (eg. a most recently recorded traffic intensity associated with a most recent time period) that equates to less than 100% of the aggregated traffic volume (eg. 37 cars representing 50% relative traffic intensity) will cause instructions to be sent to the relevant light management system to adjust the existing illumination of the one or more lighting devices accordingly and substantially in real-time.

In any one of the embodiments described herein, the traffic intensity includes a count of a number of pedestrians and/or vehicles passing through the section of infrastructure. The number of pedestrians and/or vehicles may be identified using one or more artificial intelligence (AI) techniques (eg. a machine learning algorithm trained to identify whether a moving object is a passing pedestrian and/or vehicle).

In any one of the embodiments, the vehicles include, but are not limited to, bicycles, motorcycles, scooters, e-scooters, cars, trucks, trams and/or buses.

In any one of the embodiments, one or more artificial intelligence techniques are utilized across multiple additional steps described herein, including the processing of traffic intensity data to determine a relative traffic intensity.

In any one of the embodiments, the light management system may specify a level of illumination applicable to apply to the one or more lighting devices substantially in real-time. For example, this may be in the form of a command to increase the existing level of illumination (ie. brighten) the one or more lighting devices, or an instruction to decrease the existing level of illumination (ie. dim) the one or more the lighting devices.

In any one of the embodiments, the light management system may apply particular levels of illumination based upon the relative traffic intensity determined as within a predetermined range of intensities. In a particular embodiment, there may be three particular levels of illumination, (eg. 30%, 70% and 100%). In this embodiment, when the relative traffic intensity is determined as lower than 25% of the predetermined traffic intensity, the one or more lighting devices are caused to illuminate at 30% capacity, when the relative traffic intensity is determined as between 25% and 50% of the predetermined traffic intensity, the one or more lighting devices are caused to illuminate at 70% capacity, and when the relative traffic intensity is determined as above 50% of the predetermined traffic intensity, the one or more lighting devices are caused to illuminate at 100% capacity.

The abovementioned relative traffic intensity bands of 0 to 24%, 25 to 50% and 51 to 100%, and the corresponding illumination level adjustments of 30%, 70% and 100%, are described by way of example only. A skilled reader will understand that the present invention is not to be limited to any one of these examples, and it is to be understood that illumination profiles will often be selected according to the desired parameters pertaining to a particular application and/or taking into account regulatory requirements within a particular jurisdiction.

In any one of the embodiments, the traffic intensity data is received from one or more traffic sensors associated with the particular section of infrastructure. The one or more traffic sensors may employ image recognition techniques for monitoring the traffic intensity based on, for example, a still or moving image of the section of infrastructure. Traffic intensity data may also include data from a radar, lidar or heat-map reading or any alternative means of detecting movement along a section of infrastructure.

In any one of the embodiments, the method may further include receiving, by one or more processors, feedback from the light management system regarding a current illumination status of each of the one or more lighting devices.

In any one of the embodiments, communications to and from the light management system may be affected at the Application Programming Interface (API) level.

In any one of the embodiments, data from the one or more traffic sensors may be provided in JSON format.

In any one of the embodiments, the one or more lighting devices may include hardware (eg. LCUs) affixed to the lighting device(s) that enables the illumination output of the lighting device(s) to be adjusted based on the hardware directly receiving instructions to adjust existing illumination. In an alternative embodiment, a remote control system receives the instructions to adjust the illumination which in turn causes the hardware (eg. LCUs) affixed to the lighting device(s) to adjust existing illumination accordingly.

In another aspect, the present invention provides a computer-implemented system that dynamically controls infrastructure illumination, the system including one or more computer processors configured to receive traffic intensity data and determine traffic intensity recorded at a particular section of infrastructure in substantially real-time, receive a maximum luminosity value of one or more lighting devices configured to illuminate a particular section of infrastructure according to the traffic intensity, process the received traffic intensity data by comparing traffic intensity recorded at the particular section of infrastructure with the traffic intensity in respect of which the maximum luminosity value applies determine a relative traffic intensity, and operate substantially in real-time a light management system to control the illumination of the one or more lighting devices, the light management system controlling illumination according to the determined relative traffic intensity relevant to the particular section of infrastructure.

In yet another aspect, the present invention provides a non-transitory computer-readable medium including computer instruction code that, when executed, causes one or more processors to perform the steps of receiving traffic intensity data and determine traffic intensity recorded at a particular section of infrastructure in substantially real-time, processing the received traffic intensity data by comparing traffic intensity recorded at the particular section of infrastructure with a predetermined traffic intensity for the particular section of infrastructure to determine a relative traffic intensity, and operating substantially real-time, a light management system control the illumination of the one or more lighting devices, the light management system adjusting illumination of the one or more lighting devices according to the determined relative traffic intensity relevant to the particular section of infrastructure.

### BRIEF DESCRIPTION OF THE DRAWINGS

Embodiments of the invention will now be described in further detail with reference to the accompanying Figures in which:

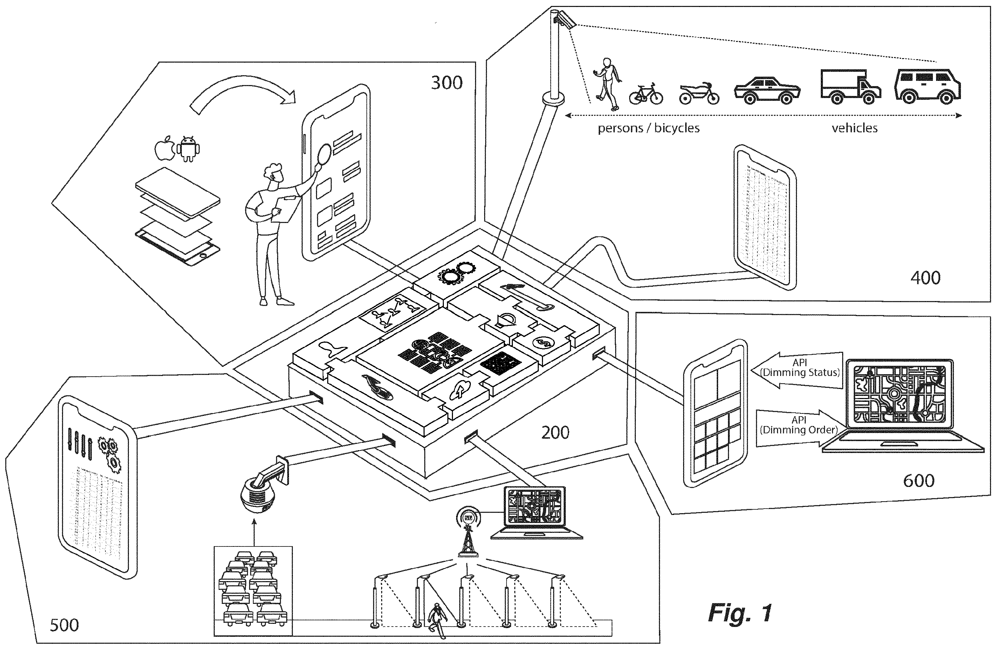

Figure 1 provides an overview of a system according to an embodiment of the present invention detailing, in particular, the interaction between the various system components;

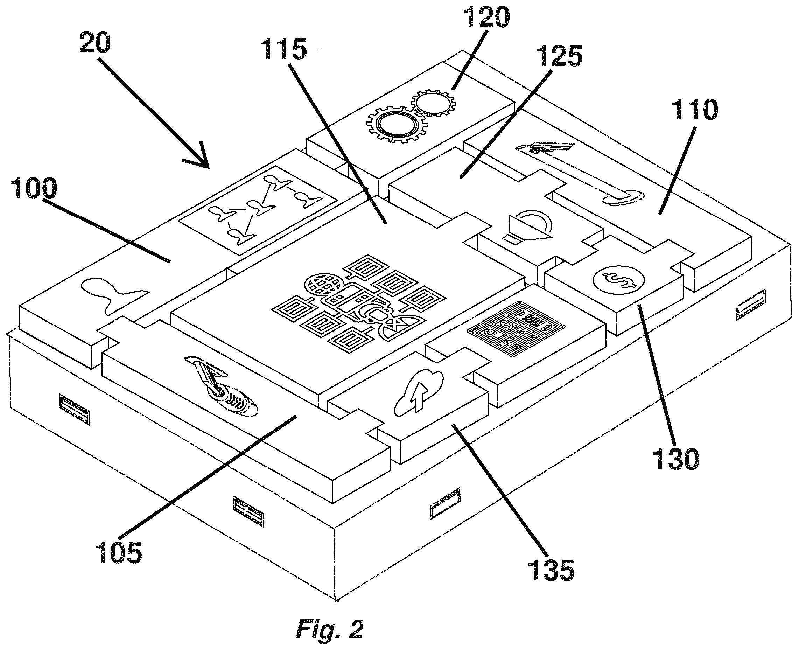

Figure 2 illustrates a diagram associated with an exemplary server component within the system illustrated in Figure 1;

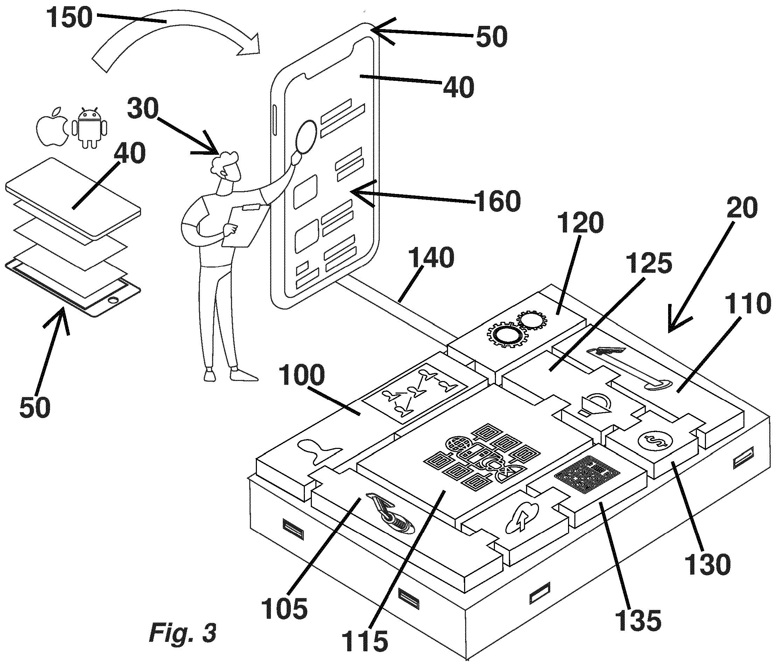

Figure 3 illustrates a diagram representing an exemplary process that enables a user to utilize a data communications device to create, download and/or install a software application, and subsequently access and register to use the software application for interaction with the system illustrated in Figure 1, including to manage the level of illumination of particular infrastructure;

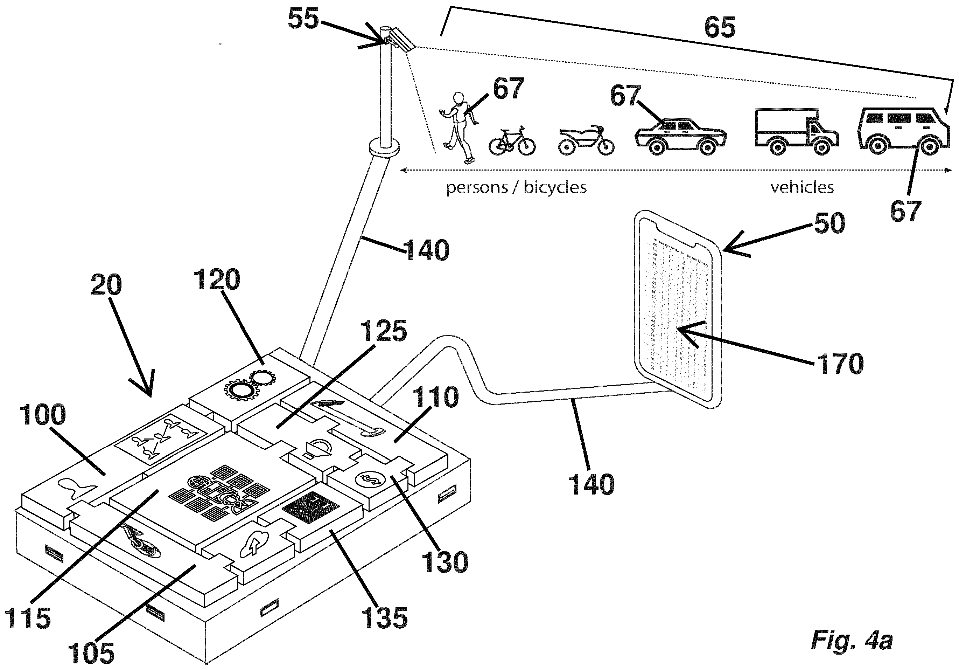

Figure 4a illustrates a diagram representing an exemplary process enabling traffic intensity data captured using traffic sensors associated with a particular section of infrastructure to be received by the server component and subsequently processed to enable traffic volume and associated information to be viewed by the user in substantially real-time utilizing their data communications device;

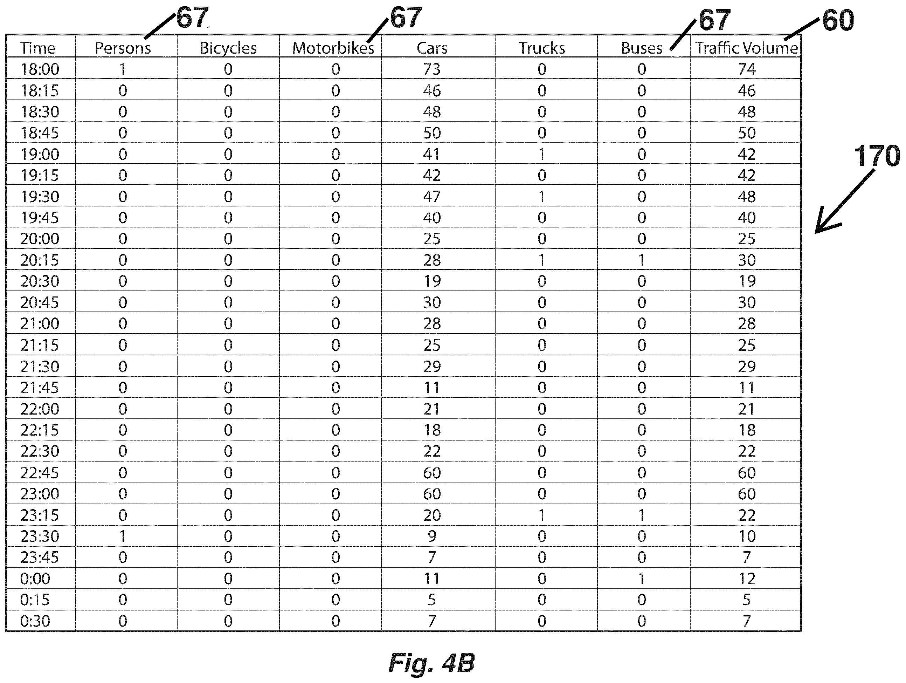

Figure 4b illustrates an exemplary display of traffic volume information generated based on the processing of traffic intensity data captured between 6:00pm and 12:30pm at 15 minute intervals;

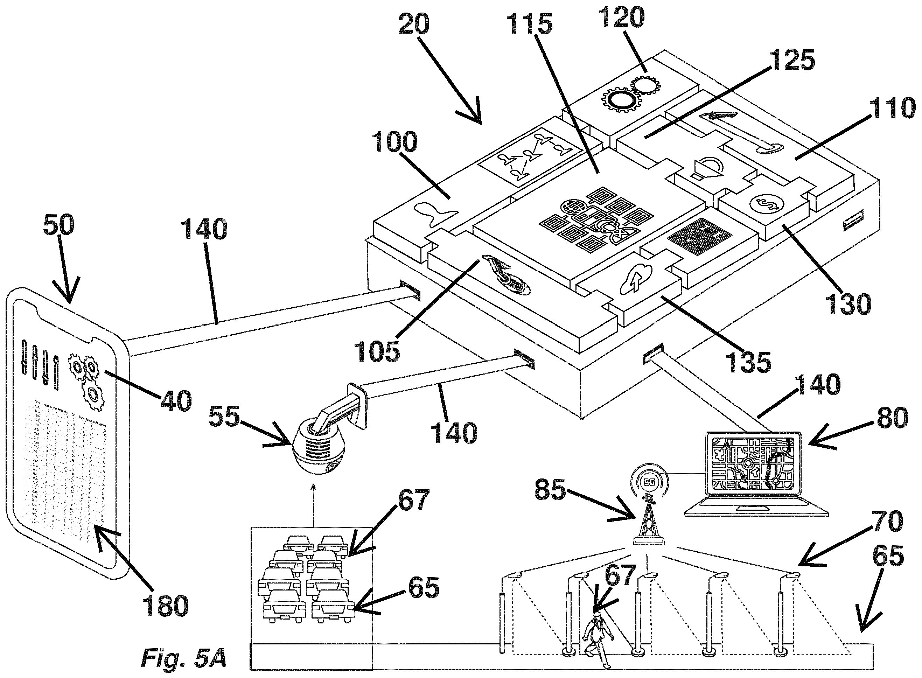

Figure 5a illustrates a diagram representing an exemplary process that enables traffic intensity data captured using traffic sensors associated with a particular section of infrastructure to be received by the server component and subsequently processed to enable relative traffic intensity associated with the particular section of infrastructure to be determined, with a lighting management system associated with the particular section of infrastructure subsequently controlled according to the relative traffic intensity;

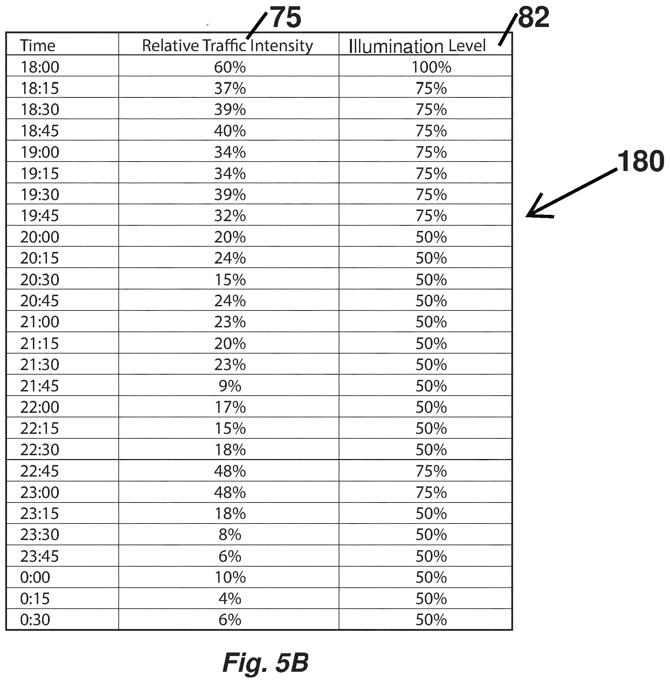

Figure 5b illustrates an exemplary display of relative traffic intensities determined according to traffic intensity data which has been captured between 6:00pm and 12:30pm at 15 minute intervals, along with the illumination levels for the one or more lighting devices determined according to relative traffic intensities;

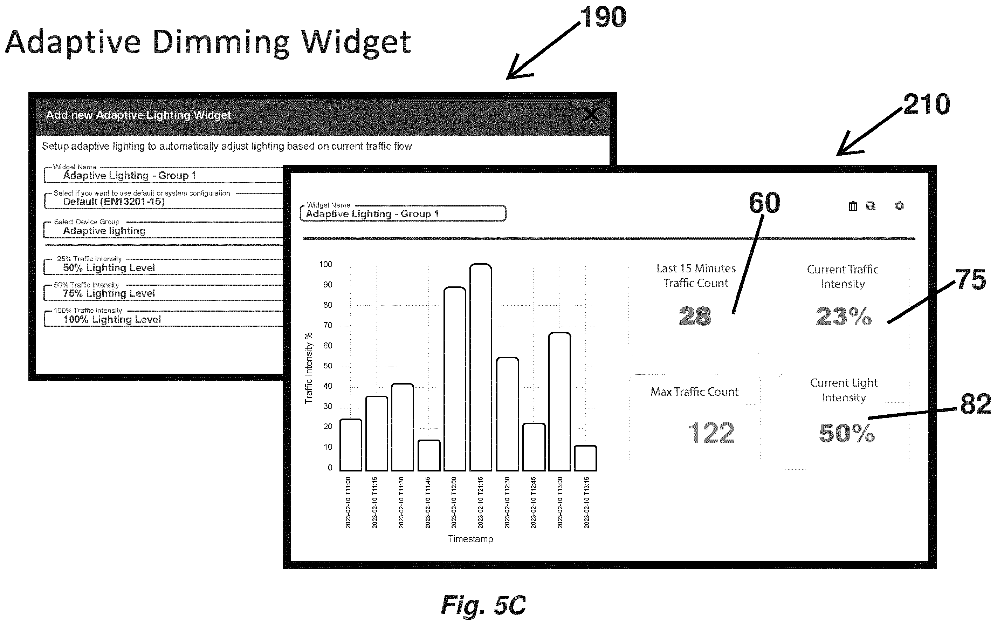

Figure 5c illustrates a first exemplary display of information pertaining to relative traffic intensity bands and corresponding illumination levels, and a second exemplary display of live data including relative traffic intensity determined for a most recent 15 minute time period and a corresponding light intensity at which one or more lighting devices will be operated according to relative traffic intensity;

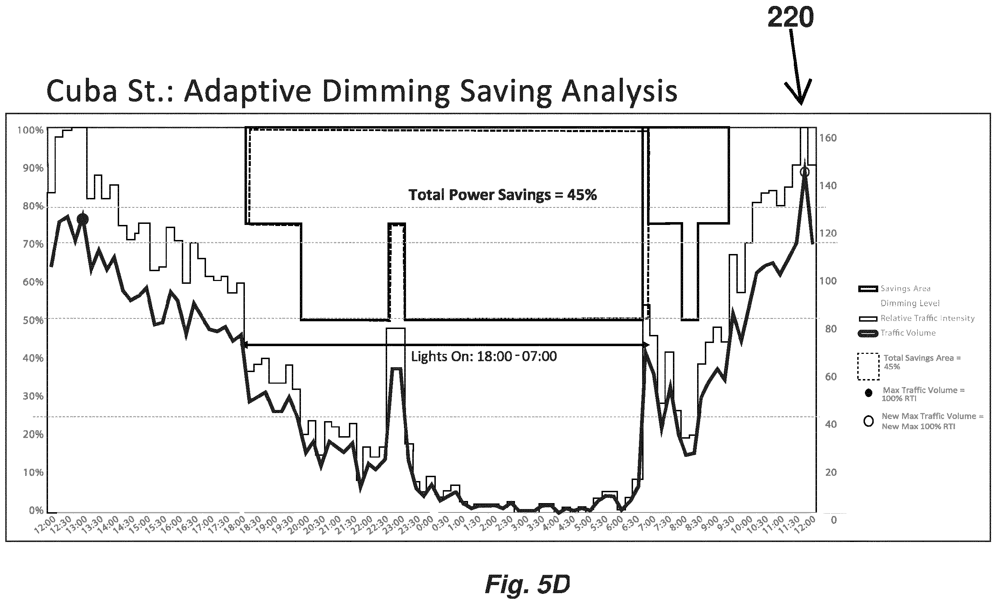

Figure 5d illustrates a graph representing power savings and additional information as a function of time as a result of controlling the one or more lighting devices according to the determined relative traffic intensities; and

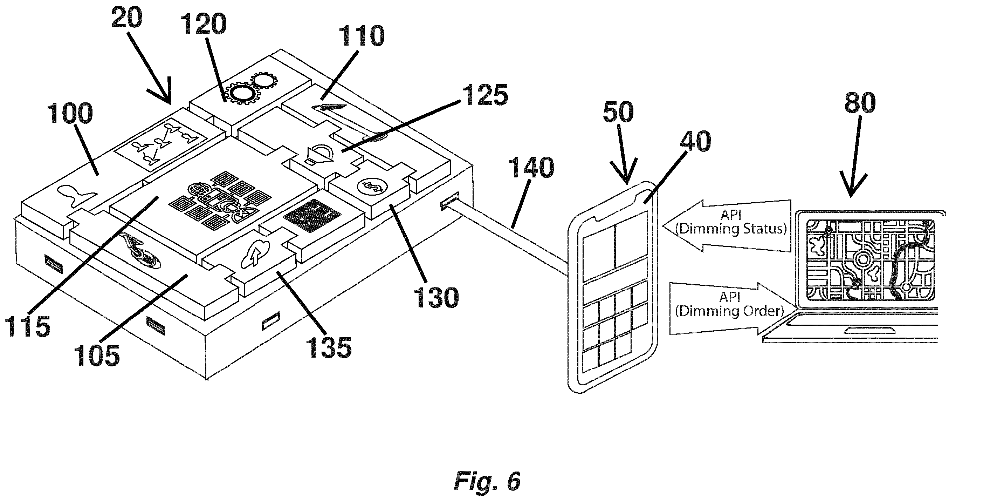

Figure 6 illustrates a diagram representing an embodiment in which communications between the data communications device of the user and the light management system used to control the illumination of the one or more lighting devices utilise an Application Programming Interface (API).

### DETAILED DESCRIPTION OF EMBODIMENT(S) OF THE INVENTION

For simplicity and illustrative purposes, the present disclosure is described by referring to embodiment(s) thereof. In the following description, numerous specific details are set forth to provide a better understanding of the present disclosure. It will be readily apparent, however, that the current disclosure may be practiced without limitation to the specific details. In other instances, some features have not been described in detail to avoid obscuring the present disclosure.

Reference to a "lighting device" herein is intended to include within its scope any form of new or existing lighting device configured for use in infrastructure (eg. LED luminaires used for street lighting). It will be further understood that reference to "one or more lighting devices" may include within its scope a single lighting device or a group of lighting devices where a group of lighting devices may be positioned in the same geo-zone (ie. wherein the illumination of lighting devices in the same geo-zone is adjustable using a single command). Furthermore, reference to "light management system" herein includes within its scope any type of system including a Control Management System(s) (CMSs) with which Lighting Control Units (LCUs) or other electronic componentry associated with the lighting devices are operably connected and controlled. Of course, skilled readers will appreciate that a CMS may comprise a single centralised CMS that operates to receive data centrally and control lighting systems or alternatively, a system comprising many separate CMSs that collectively receive relevant data pertaining to lighting under the control of the respective CMS units. Systems comprising many separate CMS units effectively operate according to a distributed (non-centralised) configuration wherein the separate CMS units may, or may not, inter-connect and communicate with each other where each CMS unit may control an individual group of luminaires within a network of all controlled luminaires. Additionally, arrangements may be implemented that comprise a hybrid between a centralised and distributed CMS configuration.

The present invention, according to an embodiment, relates to a system and method of dynamically controlling infrastructure illumination as depicted in the accompanying Figures. The system and method provide a platform that hosts a computer-executable software application (40), wherein the application (40) is accessible by users (30).

The platform may be provided by a central server (20), or any other similarly equipped hardware device, that includes one or more processors and/or databases for performing functions described herein. Such functions include receiving traffic intensity data (eg. from one or more traffic sensors (55) configured to record traffic intensity (volume) (60) at a particular section of infrastructure (65)), including the volume of pedestrians, vehicles, etc. (67) recorded as moving through the particular section of infrastructure (65). The functions further include processing the received traffic intensity data by comparing traffic intensity (60) recorded at the particular section of infrastructure (65) with a predetermined traffic intensity to determine a relative traffic intensity (75). The server (20) further transmits, substantially in real-time, instructions to a light management system (80) operable to control the illumination of the one or more lighting devices (70), the instructions causing the light management system (80) to adjust existing illumination based at least on the determined relative traffic intensity (75).

The predetermined traffic intensity may be recorded in a number of ways. In one example, the server (20) receives a maximum luminosity value allocated to one or more lighting devices (70) configured to illuminate the particular section of infrastructure (65) based on a traffic intensity, wherein the predetermined traffic intensity is the traffic intensity upon which the maximum luminosity value is based. In this way, the received traffic intensity data may be processed by comparing the traffic intensity (60) recently recorded (eg. substantially in real-time) at the particular section of infrastructure (65) with the traffic intensity upon which the maximum luminosity value is based to determine a relative traffic intensity (75).

In a second alternative example, the server (20) stores historical data relating to traffic intensities recorded during a plurality of historical time periods. In this embodiment, a maximum traffic intensity is recorded at the particular section of infrastructure (65) during a particular time period of the plurality of historical time periods, such that the predetermined traffic intensity is the maximum traffic intensity. In this way, the received traffic intensity data may be processed by comparing the traffic intensity (60) recently recorded at the particular section of infrastructure (65) with the previously recorded maximum traffic intensity. It will be appreciated that in this embodiment, the previously recorded maximum traffic intensity may increase as additional measurements of traffic intensity are recorded, and hence any new maximum traffic intensity recorded may become the new predetermined traffic intensity against which incoming traffic intensities are compared.

The person skilled in the relevant field of technology will appreciate that the platform and associated hardware provides a solution to existing problems associated with the implementation and control of lighting devices for infrastructure. Rather than maintaining a constant luminosity or controlling the lighting devices (70) solely based on assumed values, theoretical values or pre-defined points in time, the present platform seeks to adjust the existing luminosity of lighting devices (70) according to actual traffic intensity at any given point in time whilst maintaining adherence to any regulatory requirements.

Not only does the solution described herein give rise to increased energy efficiency and a more environmentally friendly outcome (due to the lighting devices being controlled to operate at reduced illumination levels when possible), but regulatory bodies, pedestrians, drivers, cyclists, etc, may be assured that sufficient illumination will be provided at times of maximum traffic irrespective of the time at which they are travelling through a particular section of infrastructure.

Figure 1 is divided into segments which are further expanded in subsequent Figures 2 to 6. In particular, Segment 200 of Figure 1 illustrates the server component (20) with which a software application (40) operating on data communication device (50) of user (30) is configured to communicate.

It will be apparent to persons skilled in the relevant field of technology that the software application (40) may be a mobile application or a web application, and similarly, the device (50) utilized by user (30) may be a portable device such as a mobile phone or laptop, or alternatively a fixed location device such as a personal computer (not shown).

Regarding the server component (20) additionally detailed in Figure 2, the skilled person will appreciate that the steps described herein may be executed by the device (50), wherein such operations are facilitated by the software application (40) operating on each device. According to another implementation of the present invention, the server (20) is programmed to provide most, or all, of the functions described herein particularly where they cannot be provided locally on the user devices (50) or where it may be technically or commercially infeasible to implement such a configuration. In other words, the steps described herein as performed by the device (50), or components thereof, may be associated with hardware or system functionality located externally of the device, such as the remote central server (20), the light management system (80), the lighting devices (70), lighting control units associated with the lighting devices, or other electronic componentry (ie. in a distributed architecture). Different arrangements are possible in this regard, and alternate variations will be apparent to persons skilled in the relevant field of technology.

Segment 300 of Figure 1 illustrates how the server (20) may be configured for communication with a device (50) associated with a user (30). In one example, the server (20) may receive data from the device (50) for the purpose of creating a user account (eg. based upon the entry of details by the user (30)). Segment 300 of Figure 1 further shows the user (30) downloading and installing the application (40) and subsequently accessing an interface (160) of the application (40) to establish the user account. Segment 400 of Figure 1 shows an example of how traffic intensity data and other data (eg. speed of traffic, density of traffic, near-miss data, etc.) may be captured in substantially real-time using one or more traffic sensors (55), where processed data may be subsequently viewed in a user interface (170), as further detailed in Figure 4.

Segment 500 of Figure 1 illustrates an additional example of how real-time traffic intensity data for a section of infrastructure (65) may be captured using traffic sensors (55), how such data may be processed to determine a relative traffic intensity (75) (viewable in interface (180)), and how the determined relative traffic intensity (75) may be utilized to generate instructions (commands) during operation of a light management system (80) responsible for controlling the illumination level of one or more lighting devices (70) (ie. to adjust an existing illumination of the lighting devices (70) as required and substantially in real-time), as further detailed in Figure 5. Each command may include a percentage illumination adjustment (82) to be applied to the existing illumination of the one or more lighting devices (70), and such instructions may be transmitted through suitable data communications network infrastructure (85). Alternatively, as further detailed in Figure 6, the commands transmitted to (and feedback received from) the light management system (80) (eg. a current illumination level of the one or more lighting devices (70)) may be via an Application Programming Interface (API) that enables communication between applications.

As mentioned above, Figure 2 illustrates in greater detail Segment 200 of Figure 1 and, in particular, Figure 2 shows the server component (20) which includes infrastructure upon which the platform of the present invention may operate. Such infrastructure may be local or cloud based. The central server (20) may operate one or more computer processors and maintain one or more databases to enable the following functionality or storage:
- User account register (100) storing details of users (30) (eg. name, address, contact details, and any additional details which may be relevant for the purpose of identifying each user). Additional details which may be stored in the user account register (100) include details relating to particular sections of infrastructure (65) assigned to specific users (30) for management thereof;
- Traffic sensor database (105) storing details relating to the number, type, location, etc., of traffic sensors (55) from which traffic intensity data is retrieved for the purpose of determining substantially real-time traffic intensity for a particular section of infrastructure (65);
- Lighting device and light management system database (110) storing details relating to the number, type, location, etc., of lighting devices (70) and their associated management systems (80) in respect of which instructions (commands) are generated for the purpose of adjusting an existing illumination (brightness) level of one or more lighting devices (70) located at a particular section of infrastructure (65) based on the relative traffic intensity;
- Data library (115) storing data received by or transmitted from the server (20) in addition to the results of processing such data for the purpose of creating a historical record of all inputs and outputs. For example, the stored data may include traffic intensity data received from traffic sensors (55), aggregated measurements of traffic intensity, data relating to illumination levels received from light management systems (80), determined relative traffic intensities, and data relating to the extent (82) to which the illumination of particular lighting devices (70) have been adjusted according to determined relative traffic intensities. Such data may also include timestamps or an indication of time periods to which the data relates. For example, timestamps may indicate the date and time at which particular data was recorded, or dates and times at which particular instructions were generated by light management systems (80). The data library (115) may store various additional data, and it will be appreciated that the library (115) will form an extensive resource upon which information may be extracted by users (30) or by administrators, either directly or through an API, in the form of reports, graphs, etc., for analytical and other purposes including for evaluating the performance of the platform (energy savings, etc.);
- Data processing functionality (120) for processing incoming data including user input commands for the purpose of making relevant determinations as described herein, and for generating relevant outputs. For example, the data processing capability of the server (20) may be responsible for processing incoming traffic intensity data for the purpose of determining a number and type of traffic (eg. identifying how many pedestrians, vehicles, etc, are passing through a section of infrastructure (65) during a particular time period (eg. during a most recent 15 minute time period)), processing lighting device data which may include data received from one or more regulatory bodies to identify a maximum luminosity value allocated to lighting devices (70) configured to illuminate the particular section of infrastructure (65) based on a given traffic intensity, and determining a relative traffic intensity (75) for the recent time period. Functionality (120) having processed data, may provide relevant processed data for lighting management systems (80) to operate based on a determination that an adjustment is required to current illumination levels based on the determined relative traffic intensity (75) for a relevant section of infrastructure (65). One or more artificial intelligence (AI) algorithms may also be utilized to assist the processing of data by server functionality (120);
- Alerts / Notifications functionality (125) that enables alerts and/or notifications to be generated and displayed to users (30) on their devices (50) at appropriate times, including for example where feedback from one or more light management systems (80) indicates a fault (eg. particular lighting devices (70) not operational) or the like;
- Payment Gateway (130) that enables any required financial transactions to be processed utilizing the software application (40) functionality, including for example payment of ongoing subscription fees to a platform administrator, payments to regulatory bodies for retrieval of relevant information, etc; and
- Application Programming Interface (API) functionality (135) that enables integration and communication between software applications (40) operating on the user devices (50) and applications associated with the light management systems (80).

Figure 2 also depicts server (20) configured to enable communication (140) with the devices (50) and, in particular, the software application (40) operating on each device. Such communications may occur via the internet or similar network.

Figure 3 illustrates in greater detail Segment 300 of Figure 1 and, in particular, the steps associated with a user (30) installing (150) the software application (40) on their device (50) and subsequently accessing a user login and registration interface (160) associated with the application (40). Such access may be granted after the user (30) has installed the application which may be achieved by downloading the application (40) from an application store. Each user (30) may create an account (which may include a user profile) using the application (40) and the account/profile information may be stored in the user account register (100).

Figure 4a illustrates in greater detail Segment 400 of Figure 1 and, in particular, how a traffic sensor (55) may be utilized to detect traffic intensity (also referred to herein as traffic volume) (60) associated with a particular section of infrastructure (65). The traffic sensor(s) (55) may employ image recognition techniques for monitoring the traffic intensity based on, for example, a still or moving image of the section of infrastructure. Traffic intensity data may also comprise data from a radar, lidar or heat-map reading or any number of alternate means of detecting movement along the section of infrastructure.

Once user (30) has accessed the application (40), the user (30) may view information stored or information currently being recorded, including in relation to traffic intensities (60) recorded at one or more particular sections of infrastructure (65) for which the user (30) has access privileges. Accordingly, the user (30) is able to view the traffic intensity data and utilize that data as required, including for analytical purposes. Such information may be displayed in an interface (170), and Figure 4b provides an example of the type of data to which a user (30) may have access. In the particular embodiment shown, received traffic intensity data represents traffic intensity measurements captured over 15 minute time periods between 6:00pm and 12:30am, wherein the number of detected pedestrians, vehicles, etc., (67) are aggregated into a single measurement of traffic intensity (60).

The vehicles (67) may include, but are not limited to, bicycles, motorcycles, scooters, e-scooters, cars, trucks, trams and/or buses.

Figure 5a illustrates in greater detail Segment 500 of Figure 1 and, in particular, the use of a traffic sensor (55) configured to similarly capture traffic intensity data relating to a particular section of infrastructure (65) over 15 minute time periods between 6:00pm and 12:30am. Additionally, Figure 5a illustrates an interface (180) on which a user (30) may view additional information determined by the server (20) based on receiving the traffic intensity data, including for example a determined relative traffic intensity (75) for each of the 15 minute time periods and a corresponding illumination level (82) to which one or more lighting devices (70) associated with the particular section of infrastructure (65) has been adjusted based on the determined relative intensities (75).

It will be appreciated that whilst the illumination level percentage (82) may directly correlate with the percentage of a recently recorded relative traffic intensity (75) as compared with a predetermined traffic intensity (eg. on a one to one basis, where the percentage is 80% and the illumination level is adjusted down to an 80% illumination level), the more likely scenario will be that there are relative traffic intensity bands, (eg. 0 to 24%, 25 to 50% and 51 to 100%) wherein the illumination level is adjusted to 50%, 75% and 100% respectively (as an example only), as shown in the table of Figure 5b. The present invention is not limited to this example, and as previously stated, illumination profiles will often be selected according to the desired parameters pertaining to a particular application and/or taking into account regulatory controls within a particular jurisdiction.

Also, two methods have been previously described by which the predetermined traffic intensity associated with a particular section of infrastructure (65), against which a newly recorded traffic intensity (60) may be compared, is determined. In the first embodiment described, a maximum luminosity value previously allocated to the one or more lighting devices (70) configured to illuminate the particular section of infrastructure (65) based on a given traffic intensity is received. In that embodiment, the predetermined traffic intensity is the given traffic intensity. Accordingly, using the example shown in Figure 5b, the given traffic intensity upon which the maximum luminosity is based is 122 such that a recorded traffic intensity of 74 will give rise to a determination of approximately 60% relative traffic intensity. Since 60% falls within the 51 to 100% traffic intensity band, the illumination level of the lighting device(s) (70) will be adjusted to (or maintained at) 100%.

It is to be understood that the maximum luminosity value allocated to the one or more lighting devices (70) may not necessarily represent the maximum potential illumination output of the lighting device(s) (70). In another example relating to the first embodiment, for a particular interval of time (eg. 8:00pm to 6:00am), the maximum luminosity value allocated to the one or more lighting devices (70) by a regulatory body (not shown) may be 70% of the maximum luminosity possible using the one or more lighting devices (70). This maximum luminosity value may be based on a traffic intensity of 6 vehicles (for example) passing through the particular section of infrastructure (65) over 15 minute time intervals. If a relative traffic intensity (75) for a recent 15 minute time period is determined to be 3 vehicles (ie. 50% relative traffic intensity), then the one or more lighting devices (70) may be controlled to output 35% of their maximum luminosity (ie. 50% of a maximum 70% luminosity possible from the lighting devices (70) based on regulatory requirements).

Similarly, if relative traffic intensity for a subsequent 15 minute time period is determined to be 6 vehicles (ie. 100% relative traffic intensity), then the luminosity of the one or more lighting devices (70) may be increased from 35% back to 70% (ie. revert back to 100% of the maximum 70% luminosity possible from the lighting devices based on regulatory requirements). In this way, the maximum luminosity established by a regulatory body is always maintained during the highest volumes of traffic and hence will comply with regulatory requirements.

In the second embodiment described, a maximum traffic intensity recorded at the particular section of infrastructure (65) during a particular time period of a plurality of historical time periods represents the predetermined traffic intensity. Accordingly, if the maximum traffic intensity over a plurality of historical time periods was recorded as 122, then a subsequently recorded traffic intensity of 74 would also give rise to a determination of approximately 60% relative traffic intensity. Since 60% falls within the 51 to 100% traffic intensity band, the illumination level of the lighting device(s) (70) will be adjusted (or maintained at) 100%.

It is to be understood that the traffic intensity may be a measure of how many pedestrians and/or vehicles (67) have passed through the section of infrastructure (65). The number of pedestrians and/or vehicles (67) may be identified using one or more artificial intelligence (AI) techniques (eg. a machine learning algorithm trained to identify whether a moving object is a passing pedestrian and/or vehicle). One or more artificial intelligence techniques may be utilized across multiple additional steps described herein, including the processing of traffic intensity data to determine a relative traffic intensity (75).

It will be appreciated that data used to influence commands generated by the light management system (80) regarding illumination of the lighting devices (70) may include data other than traffic data. For example, data may be received from one or more additional sources, and the light management system (80) may be operated to adjust an existing illumination of the one or more lighting devices (70) according to not only the determined relative traffic intensity, but also the data from the one or more additional sources. In one example, data relating to road safety regulations may be received and utilized such that commands generated by the light management system (80) may be cross-mapped against the road safety regulations through an algorithm. In another example, the additional data may include commands received from one or more user device(s), including instructions from a user to provide illumination of an anticipated path of travel of the user. In this regard, an individual may pre-specify a path of travel for full illumination and pay a fee in respect of full illumination (or a minimum level of illumination) at the relevant time and for the period of travel. Alternatively, an individual may request enhanced illumination along a path of travel that may be determined according to the current geo-location of the individual according to an individual's device (eg. Smartphone) or a vehicle in which the individual is travelling.

The ability to arrange a fully illuminated path of travel may be afforded to individuals who are walking, cycling or travelling in a motor vehicle and whilst this may comprise a "fee for service" arrangement for individual members of the public, the functionality may be automatically activated in respect of emergency vehicles and/or maintenance vehicles such that full, or a minimum level of illumination, is provided for such vehicles according to their path of travel, or any alteration to a path of travel, as they proceed to their destination according to their geo-location at any particular point in time.

In another example, the additional data may relate to the dispatching of emergency vehicles, including information relating to an anticipated path of travel of an emergency vehicle. In this example, the luminosity of the public lighting devices (70) may be adjusted to fully illuminate (without any dimming) the expected path of a dispatched emergency vehicle, thereby ensuring maximum luminosity along the path travelled by the emergency vehicle.

In further examples, the additional data may include environmental monitoring sensor data including information relating to climate warnings and/or predictions including information regarding expected storms, fog, heavy rain, hail, etc, as well as expected astronomical factors such as moon brightness, solar eclipses, etc, all of which are likely to affect general illumination and/or visibility along a particular section of infrastructure.

Such additional data may be useful not only to the user of the light management system but also to other users with whom they may interact.

Figure 5c illustrates an example interface (190) regarding an exemplary "setup" display of information including information pertaining to relative traffic intensity bands and corresponding illumination levels for a particular section of infrastructure (65) associated with a particular user (30). Also shown is a second example interface (210) in which live data and a corresponding graph may be displayed to the user (30) including a most recently determined traffic intensity (60), the determined relative traffic intensity (75), and the illumination level (82) applied (ie. currently) based on the determined relative traffic intensity (75). Figure 5d illustrates a further graph representing power savings and additional information as a function of time, with such data retrievable from the data library (115). Any values depicted in the graph of Figure 5d are not intended to represent accurate values based on data shown in Figures 4b, 5b or 5c for example, and are shown for illustrative purposes only.

Figure 6 depicts Segment 600 of Figure 1 in greater detail and in particular, an exemplary method by which communications to and from the light management system (80) may be achieved, namely, through the use of an Application Programming Interface (API) or other suitable means.

Lighting devices associated with infrastructure may already have LCUs affixed to the lighting device which are configured to transmit data to CMSs. Each CMS may be provided by the same vendor that supplies the LCUs, and each vendor-specific system may be different in terms of its features and connectivity. The system and method of the present invention may be implemented to control any given CMS irrespective of the vendor of the CMS/LCU that are installed and in use, and irrespective of the way in which the LCUs are configured to connect to the CMS. Such an arrangement is achievable when the hardware (eg. LCUs) affixed or incorporated into the lighting devices (70) provide the dimming profiles (ie. enabling the illumination output of the lighting devices to be adjusted based on the hardware receiving instructions from the light management system (80)) to adjust existing illumination).

It will be appreciated that the one or more lighting devices (eg. luminaires) may not require LCUs or similar hardware affixed thereto since the function of the LCU to adjust the illumination of the lighting device may be incorporated into the lighting device, and such functionality may also be assisted with the use of one or more artificial intelligence techniques (eg. the incorporation of an AI software program element). In one example of such an arrangement, a traffic intensity controller within the lighting device could be utilized, wherein the controller is programmed to command LEDs associated with the lighting device(s) by reference to the data received by the controller within the lighting device.

It will also be appreciated that any data may be utilized to generate instructions (commands) for such hardware (eg. LCUs) and such commands may be transmitted either directly from the light management system (80) or via a remote control system (not illustrated in the Figures) that is not necessarily a CMS.

The skilled addressee will appreciate that the present invention enables lighting profiles associated with infrastructure to be dynamically adjusted in substantially real-time by operating a light management system, wherein the commands are issued therefore that take into account determined relative intensities of traffic (ie. traffic intensity determined according to data received from traffic sensors (55)), and potentially a range of additional data that may be obtained from a large number of sources (such as environmental monitoring data and ambient temperature and lighting data, for example). Analysis is performed in respect of the received data to determine the best dimming profile for a section of infrastructure, with new data continuously received and analysed to provide dynamic updates to the dimming profile of relevant lighting devices.

According to a preferred embodiment, the server (20) provides a centralized analysis of acquired data to determine lighting profiles, and the universality of the system is agnostic regarding any particular proprietary arrangement or configuration, thereby enabling users to purchase, install and utilize a system without constraint regarding any component comprising a proprietary component which would otherwise require the purchaser/installer to be constrained with respect to future operation and maintenance of any installed system or component thereof.

One or more of the devices described herein may include additional functionality and integrate multiple functionality within the one device, including but not limited to, vision capture, traffic detection software, wireless telecommunications, data transfer coding, power supply, back-up battery operation during grip power outages and heat-dissipating mechanisms.

Throughout this specification and claims which follow, unless the context requires otherwise, the word "comprise", and variations such as "comprises" and "comprising", will be understood to mean the inclusion of a stated feature or step, or group of features or steps, but not the exclusion of any other feature or step or group of features or steps.

## Claims

1. A computer-implemented method of dynamically controlling infrastructure illumination, the method **characterized in that** it includes:
receiving, by one or more processors (20), traffic intensity data and determining a traffic intensity (60) at a particular section of infrastructure (65) according to the received traffic intensity data;
comparing, by one or more processors (20), the determined traffic intensity (60) at the particular section of infrastructure (65) with a predetermined traffic intensity for the particular section of infrastructure to determine a relative traffic intensity (75); and
operating, by one or more processors (20), a light management (80) system operable to control the illumination of the one or more lighting devices (70) substantially in real-time to adjust illumination of the one or more lighting devices (70) with the determined relative traffic intensity (75) used as a reference parameter;
**characterised in that** the predetermined traffic intensity includes one or more of:
a traffic intensity associated with a maximum luminosity value allocated to one or more lighting devices (70) used to illuminate the particular section of infrastructure (65); or
a maximum traffic intensity recorded at the particular section of infrastructure (65) during a particular time period of a plurality of historical time periods.

2. A computer-implemented method according to claim 1, wherein operating the light management system (80) includes issuing one or more increase or decrease illumination commands and transmitting same to the one or more lighting devices (65) in substantially real-time.

3. A computer-implemented method according to either claim 1 or claim 2, wherein the method further includes:
receiving, by one or more processors, data from one or more additional sources, and
operating the light management system (80) to adjust existing illumination of the one or more lighting devices (65) according to the determined relative traffic intensity (75) and data received from one or more additional sources.

4. A computer-implemented method according to claim 3, wherein data from the one or more additional sources includes data relating to one or more of:
prevailing natural light conditions collected and reported substantially in real time in respect of one or more sections of infrastructure;
commands received from one or more user device(s) (50), including instructions to provide illumination along an anticipated path of travel of the user (30);
the dispatching of an emergency vehicle including information relating to the intended destination and/or anticipated path of travel of the emergency vehicle;
environmental monitoring sensor data including information relating to climate warnings and/or predictions likely to affect general illumination and visibility along one or more sections of infrastructure; and
expected astronomical factors including information relating to factors likely to affect general illumination and visibility along one or more sections of infrastructure.

5. A computer-implemented method according to 4, wherein the anticipated path of travel of either an emergency vehicle or a user is one or more of:
a path of travel that is pre-specified; or
a path of travel determined in substantially real-time according to tracking, in substantially real-time, the geo-location of the user device (50) and/or emergency vehicle.

6. A computer-implemented method according to any one of the preceding claims, wherein:
the traffic intensity data identifies a plurality of measurements of traffic intensity captured during a recent time period, the recent time period defined by a predetermined time interval,
the plurality of measurements of traffic intensity captured during the recent time period is aggregated to generate a single measurement of traffic intensity (60), and
the relative traffic intensity (75) is determined in respect of the recent time period as a percentage of the traffic intensity for which the maximum luminosity applies.

7. A computer-implemented method according to claim 6, wherein the maximum luminosity value allocated to the one or more lighting devices (70) accords with a regulatory requirement applicable to the particular section of infrastructure (65) for a particular interval of time.

8. A computer-implemented method according to any one of claims 1 to 5, wherein:
the traffic intensity data identifies a plurality of measurements of traffic intensity captured during a recent time period, the recent time period defined by a predetermined time interval,
the plurality of measurements of traffic intensity captured during the recent time period is aggregated to generate a single measurement of traffic intensity (60), and
the relative traffic intensity (75) is determined in respect of the recent time period as a percentage of the recorded maximum traffic intensity.

9. A computer-implemented method according to any one of the preceding claims, wherein the traffic intensity (60) includes a count of the number of pedestrians and/or vehicles (67) passing through the section of infrastructure (65), wherein determining the number of pedestrians and/or vehicles (67) is facilitated by using one or more artificial intelligence techniques to identify whether a moving object is a passing pedestrian and/or vehicle (67).

10. A computer-implemented method according to any one of the preceding claims, wherein instructions transmitted to the light management system (80) specify a level of illumination to apply to the one or more lighting devices (70) in substantially real-time, including:
a command to increase an existing illumination of the one or more lighting devices (70) to achieve a specified illumination; or
a command to decrease an existing illumination of the one or more the lighting devices (70) to achieve a specified illumination.

11. A computer-implemented method according to any one of the preceding claims, wherein operating the light management system (80) causes the application of particular levels of illumination according to the relative traffic intensity (75) determined as within a predetermined range of intensities.

12. A computer-implemented method according to claim 11, wherein:
when the relative traffic intensity (75) is determined to be lower than 25% of the predetermined traffic intensity, the one or more lighting devices (70) are caused to illuminate at 30% of maximum illumination capacity;
when the relative traffic intensity (75) is determined to be between 25% and 50% of the predetermined traffic intensity, the one or more lighting devices (70) are caused to illuminate at 70% of maximum illumination capacity; and
when the relative traffic intensity (75) is determined to be above 50% of the predetermined traffic intensity, the one or more lighting devices (70) are caused to illuminate at 100% of the maximum illumination capacity.

13. A computer-implemented method according to any one of the preceding claims, wherein:
the traffic intensity data is received from one or more traffic sensors (55) associated with the particular section of infrastructure (65), and
the one or more traffic sensors (55) employ image recognition techniques for monitoring the traffic intensity (60) according to still and/or moving image processing in respect of the section of infrastructure (65).

14. A computer-implemented method according to any one of the preceding claims, wherein communications to and from the light management system (80) and/or the one or more lighting devices (70), including feedback therefrom regarding a current illumination status of each of the one or more lighting devices (70), are effected using an Application Programming Interface API.

15. A computer-implemented method according to any one of the preceding claims, wherein the one or more lighting devices (70) include lighting control units operably connected to the lighting device(s) (70) that enable the illumination output of the lighting device(s) (70) to be adjusted according to the lighting control unit receiving instructions from the light management system (80) to adjust illumination of the one or more lighting devices (70).

16. A computer-implemented method according to any one of the preceding claims, wherein a plurality of sections of infrastructure (65) are operably connected to a plurality of light management systems (80) that include different electronic computing to adjust illumination of the lighting device(s) (70) and different connectivity between the light management systems (80) and the electronic computing, the method interoperable with respect to any of the plurality of light management systems (80) operated to adjust illumination of the lighting device(s) (70) operably connected thereto.

17. A computer-implemented system that dynamically controls infrastructure illumination, the system including:
one or more computer processors configured to:
receive traffic intensity data and determine a traffic intensity (60) at a particular section of infrastructure (65) according to the traffic intensity data;
compare the determined traffic intensity (60) at the particular section of infrastructure (65) with a predetermined traffic intensity for the particular section of infrastructure (65) to determine a relative traffic intensity (75); and
operate a light management system (80) operable to control the illumination of the one or more lighting devices (70) substantially in real-time to adjust illumination of the one or more lighting devices (70) with the determined relative traffic intensity (75) used as a reference parameter;
**characterised in that** (75), the predetermined traffic intensity includes one or more of:
a traffic intensity associated with a maximum luminosity value allocated to one or more lighting devices (70) used to illuminate the particular section of infrastructure (65); or
a maximum traffic intensity recorded at the particular section of infrastructure (65) during a particular time period of a plurality of historical time periods.

18. A computer-implemented system that dynamically controls infrastructure illumination, the system **characterized in that**:
one or more computer processors are configured to:
receive traffic intensity data and determine a traffic intensity (60) at a particular section of infrastructure (65) according to the received traffic intensity data;
receive a maximum luminosity value allocated to one or more lighting devices (70) configured to illuminate the particular section of infrastructure (65) according to the traffic intensity (60);
compare the determined traffic intensity (60) at the particular section of infrastructure (65) with the traffic intensity in respect of which the maximum luminosity value applies to determine a relative traffic intensity (75); and
operate, substantially in real-time, instructions to a light management system (80) to control the illumination of the one or more lighting devices (70), the light management system (80) controlling the illumination with the determined relative traffic intensity (75) used as a reference parameter.

19. A non-transitory computer-readable medium including computer instruction code **characterized in that**, when executed, the computer instruction code causes one or more processors to perform the steps of:
receiving traffic intensity data and determining a traffic intensity (60) at a particular section of infrastructure (65) according to the received traffic intensity data;
comparing the determined traffic intensity (60) at the particular section of infrastructure (65) with a predetermined traffic intensity for the particular section of infrastructure (65) to determine a relative traffic intensity (75), wherein the predetermined traffic intensity includes one or more of:
a traffic intensity associated with a maximum luminosity value allocated to one or more lighting devices (70) used to illuminate the particular section of infrastructure (65); or
a maximum traffic intensity recorded at the particular section of infrastructure (65) during a particular time period of a plurality of historical time periods; and
operating, substantially in real-time, a light management system (80) controlling illumination of the one or more lighting devices (70), the light management system (80) adjusting an illumination of the one or more lighting devices (80) with the determined relative traffic intensity (75) relevant to the particular section of infrastructure (65) used as a reference parameter.

## Patentansprüche

1. Computerimplementiertes Verfahren zur dynamischen Steuerung der Infrastrukturbeleuchtung, wobei das Verfahren **dadurch gekennzeichnet ist, dass** es umfasst:
Empfangen, durch einen oder mehrere Prozessoren (20), von Verkehrsintensitätsdaten und Bestimmen einer Verkehrsintensität (60) an einem bestimmten Infrastrukturabschnitt (65) gemäß den empfangenen Verkehrsintensitätsdaten;
Vergleichen, durch einen oder mehrere Prozessoren (20), der bestimmten Verkehrsintensität (60) an dem bestimmten Infrastrukturabschnitt (65) mit einer vorbestimmten Verkehrsintensität für den bestimmten Infrastrukturabschnitt, um eine relative Verkehrsintensität (75) zu bestimmen; und
Betreiben, durch einen oder mehrere Prozessoren (20), eines Lichtmanagementsystems (80), das dazu betreibbar ist, die Beleuchtung der einen oder mehreren Beleuchtungsvorrichtungen (70) im Wesentlichen in Echtzeit zu steuern, um die Beleuchtung der einen oder mehreren Beleuchtungsvorrichtungen (70) anzupassen, wobei die bestimmte relative Verkehrsintensität (75) als Referenzparameter verwendet wird;
**dadurch gekennzeichnet, dass**
die vorbestimmte Verkehrsintensität eines oder mehrere der Folgenden umfasst:
eine Verkehrsintensität, die mit einem maximalen Leuchtstärkewert verbunden ist, der einer oder mehreren Beleuchtungsvorrichtungen (70) zugewiesen ist, die zum Beleuchten des bestimmten Infrastrukturabschnitts (65) verwendet werden; oder
eine maximale Verkehrsintensität, die an dem bestimmten Infrastrukturabschnitt (65) während eines bestimmten Zeitraums aus einer Vielzahl historischer Zeiträume aufgezeichnet wurde.

2. Computerimplementiertes Verfahren nach Anspruch 1, wobei das Betreiben des Lichtmanagementsystems (80) das Ausgeben eines oder mehrerer Befehle zum Erhöhen oder Verringern der Beleuchtung und das Übertragen derselben an die eine oder mehreren Beleuchtungsvorrichtungen (65) im Wesentlichen in Echtzeit umfasst.

3. Computerimplementiertes Verfahren nach Anspruch 1 oder Anspruch 2, wobei das Verfahren ferner umfasst:
Empfangen, durch einen oder mehrere Prozessoren, von Daten aus einer oder mehreren zusätzlichen Quellen, und
Betreiben des Lichtmanagementsystems (80), um die bestehende Beleuchtung der einen oder mehreren Beleuchtungsvorrichtungen (65) gemäß der bestimmten relativen Verkehrsintensität (75) und den aus einer oder mehreren zusätzlichen Quellen empfangenen Daten anzupassen.

4. Computerimplementiertes Verfahren nach Anspruch 3, wobei die Daten aus der einen oder den mehreren zusätzlichen Quellen Daten umfassen, die sich auf eines oder mehrere der Folgenden beziehen:
vorherrschende natürliche Lichtverhältnisse, die im Wesentlichen in Echtzeit in Bezug auf einen oder mehrere Infrastrukturabschnitte erfasst und gemeldet werden;
von einer oder mehreren Benutzervorrichtungen (50) empfangene Befehle, einschließlich Anweisungen zum Bereitstellen einer Beleuchtung entlang eines voraussichtlichen Bewegungswegs des Benutzers (30);
die Entsendung eines Einsatzfahrzeugs, einschließlich Informationen bezüglich des vorgesehenen Ziels und/oder des voraussichtlichen Bewegungswegs des Einsatzfahrzeugs;
Daten von Umweltüberwachungssensoren, einschließlich Informationen bezüglich Klimawarnungen und/oder Vorhersagen, die wahrscheinlich die allgemeine Beleuchtung und Sichtbarkeit entlang eines oder mehrerer Infrastrukturabschnitte beeinflussen; und
erwartete astronomische Faktoren, einschließlich Informationen bezüglich Faktoren, die wahrscheinlich die allgemeine Beleuchtung und Sichtbarkeit entlang eines oder mehrerer Infrastrukturabschnitte beeinflussen.

5. Computerimplementiertes Verfahren nach Anspruch 4, wobei der voraussichtliche Bewegungsweg entweder eines Einsatzfahrzeugs oder eines Benutzers eines oder mehrere der Folgenden ist:
ein Bewegungsweg, der vorab festgelegt ist; oder
ein Bewegungsweg, der im Wesentlichen in Echtzeit gemäß einer im Wesentlichen in Echtzeit erfolgenden Verfolgung der Geolokalisierung der Benutzervorrichtung (50) und/oder des Einsatzfahrzeugs bestimmt wird.

6. Computerimplementiertes Verfahren nach einem der vorhergehenden Ansprüche, wobei:
die Verkehrsintensitätsdaten eine Vielzahl von Messungen der Verkehrsintensität identifizieren, die während eines jüngsten Zeitraums erfasst wurden, wobei der jüngste Zeitraum durch ein vorbestimmtes Zeitintervall definiert ist,
die Vielzahl von Messungen der Verkehrsintensität, die während des jüngsten Zeitraums erfasst wurden, aggregiert wird, um eine einzelne Messung der Verkehrsintensität (60) zu erzeugen, und
die relative Verkehrsintensität (75) in Bezug auf den jüngsten Zeitraum als Prozentsatz der Verkehrsintensität bestimmt wird, für die die maximale Leuchtstärke gilt.

7. Computerimplementiertes Verfahren nach Anspruch 6, wobei der maximale Leuchtstärkewert, der der einen oder den mehreren Beleuchtungsvorrichtungen (70) zugewiesen ist, einer regulatorischen Anforderung entspricht, die für den bestimmten Infrastrukturabschnitt (65) für ein bestimmtes Zeitintervall gilt.

8. Computerimplementiertes Verfahren nach einem der Ansprüche 1 bis 5, wobei:
die Verkehrsintensitätsdaten eine Vielzahl von Messungen der Verkehrsintensität identifizieren, die während eines jüngsten Zeitraums erfasst wurden, wobei der jüngste Zeitraum durch ein vorbestimmtes Zeitintervall definiert ist,
die Vielzahl von Messungen der Verkehrsintensität, die während des jüngsten Zeitraums erfasst wurden, aggregiert wird, um eine einzelne Messung der Verkehrsintensität (60) zu erzeugen, und
die relative Verkehrsintensität (75) in Bezug auf den jüngsten Zeitraum als Prozentsatz der aufgezeichneten maximalen Verkehrsintensität bestimmt wird.

9. Computerimplementiertes Verfahren nach einem der vorhergehenden Ansprüche, wobei die Verkehrsintensität (60) eine Zählung der Anzahl von Fußgängern und/oder Fahrzeugen (67) umfasst, die den Infrastrukturabschnitt (65) passieren, wobei das Bestimmen der Anzahl von Fußgängern und/oder Fahrzeugen (67) durch die Verwendung einer oder mehrerer Techniken künstlicher Intelligenz erleichtert wird, um zu identifizieren, ob ein sich bewegendes Objekt ein passierender Fußgänger und/oder ein passierendes Fahrzeug (67) ist.

10. Computerimplementiertes Verfahren nach einem der vorhergehenden Ansprüche, wobei an das Lichtmanagementsystem (80) übertragene Anweisungen einen Beleuchtungsgrad festlegen, der im Wesentlichen in Echtzeit auf die eine oder mehreren Beleuchtungsvorrichtungen (70) anzuwenden ist, einschließlich:
eines Befehls zum Erhöhen einer bestehenden Beleuchtung der einen oder mehreren Beleuchtungsvorrichtungen (70), um eine festgelegte Beleuchtung zu erreichen; oder
eines Befehls zum Verringern einer bestehenden Beleuchtung der einen oder mehreren Beleuchtungsvorrichtungen (70), um eine festgelegte Beleuchtung zu erreichen.

11. Computerimplementiertes Verfahren nach einem der vorhergehenden Ansprüche, wobei das Betreiben des Lichtmanagementsystems (80) die Anwendung bestimmter Beleuchtungsgrade gemäß der relativen Verkehrsintensität (75) bewirkt, die als innerhalb eines vorbestimmten Bereichs von Intensitäten liegend bestimmt wird.

12. Computerimplementiertes Verfahren nach Anspruch 11, wobei:
wenn bestimmt wird, dass die relative Verkehrsintensität (75) niedriger als 25 % der vorbestimmten Verkehrsintensität ist, die eine oder mehreren Beleuchtungsvorrichtungen (70) dazu veranlasst werden, mit 30 % der maximalen Beleuchtungskapazität zu beleuchten;
wenn bestimmt wird, dass die relative Verkehrsintensität (75) zwischen 25 % und 50 % der vorbestimmten Verkehrsintensität liegt, die eine oder mehreren Beleuchtungsvorrichtungen (70) dazu veranlasst werden, mit 70 % der maximalen Beleuchtungskapazität zu beleuchten; und
wenn bestimmt wird, dass die relative Verkehrsintensität (75) über 50 % der vorbestimmten Verkehrsintensität liegt, die eine oder mehreren Beleuchtungsvorrichtungen (70) dazu veranlasst werden, mit 100 % der maximalen Beleuchtungskapazität zu beleuchten.

13. Computerimplementiertes Verfahren nach einem der vorhergehenden Ansprüche, wobei:
die Verkehrsintensitätsdaten von einem oder mehreren Verkehrssensoren (55) empfangen werden, die dem bestimmten Infrastrukturabschnitt (65) zugeordnet sind, und
der eine oder die mehreren Verkehrssensoren (55) Bilderkennungstechniken zum Überwachen der Verkehrsintensität (60) gemäß einer Standbild- und/oder Bewegtbildverarbeitung in Bezug auf den Infrastrukturabschnitt (65) einsetzen.

14. Computerimplementiertes Verfahren nach einem der vorhergehenden Ansprüche, wobei Kommunikationen zu und von dem Lichtmanagementsystem (80) und/oder der einen oder den mehreren Beleuchtungsvorrichtungen (70), einschließlich Rückmeldungen von diesen bezüglich eines aktuellen Beleuchtungsstatus jeder der einen oder mehreren Beleuchtungsvorrichtungen (70), unter Verwendung einer Anwendungsprogrammierschnittstelle API erfolgen.

15. Computerimplementiertes Verfahren nach einem der vorhergehenden Ansprüche, wobei die eine oder mehreren Beleuchtungsvorrichtungen (70) Lichtsteuereinheiten umfassen, die mit der bzw. den Beleuchtungsvorrichtung(en) (70) wirkverbunden sind und ermöglichen, dass die Lichtabgabe der Beleuchtungsvorrichtung(en) (70) entsprechend dem Empfang von Anweisungen von dem Lichtmanagementsystem (80) durch die Lichtsteuereinheit zum Anpassen der Beleuchtung der einen oder mehreren Beleuchtungsvorrichtungen (70) angepasst wird.

16. Computerimplementiertes Verfahren nach einem der vorhergehenden Ansprüche, wobei eine Vielzahl von Infrastrukturabschnitten (65) mit einer Vielzahl von Lichtmanagementsystemen (80) wirkverbunden ist, die unterschiedliche elektronische Recheneinrichtungen zum Anpassen der Beleuchtung der Beleuchtungsvorrichtung(en) (70) und unterschiedliche Konnektivität zwischen den Lichtmanagementsystemen (80) und den elektronischen Recheneinrichtungen umfassen, wobei das Verfahren in Bezug auf jedes der Vielzahl von Lichtmanagementsystemen (80), das zum Anpassen der Beleuchtung der damit wirkverbundenen Beleuchtungsvorrichtung(en) (70) betrieben wird, interoperabel ist.

17. Computerimplementiertes System, das die Infrastrukturbeleuchtung dynamisch steuert, wobei das System umfasst:
einen oder mehrere Computerprozessoren, die konfiguriert sind zum:
Empfangen von Verkehrsintensitätsdaten und Bestimmen einer Verkehrsintensität (60) an einem bestimmten Infrastrukturabschnitt (65) gemäß den Verkehrsintensitätsdaten;
Vergleichen der bestimmten Verkehrsintensität (60) an dem bestimmten Infrastrukturabschnitt (65) mit einer vorbestimmten Verkehrsintensität für den bestimmten Infrastrukturabschnitt (65), um eine relative Verkehrsintensität (75) zu bestimmen; und
Betreiben eines Lichtmanagementsystems (80), das dazu betreibbar ist, die Beleuchtung der einen oder mehreren Beleuchtungsvorrichtungen (70) im Wesentlichen in Echtzeit zu steuern, um die Beleuchtung der einen oder mehreren Beleuchtungsvorrichtungen (70) anzupassen, wobei die bestimmte relative Verkehrsintensität (75) als Referenzparameter verwendet wird;
**dadurch gekennzeichnet, dass**
die vorbestimmte Verkehrsintensität eines oder mehrere der Folgenden umfasst:
eine Verkehrsintensität, die mit einem maximalen Leuchtstärkewert verbunden ist, der einer oder mehreren Beleuchtungsvorrichtungen (70) zugewiesen ist, die zum Beleuchten des bestimmten Infrastrukturabschnitts (65) verwendet werden; oder
eine maximale Verkehrsintensität, die an dem bestimmten Infrastrukturabschnitt (65) während eines bestimmten Zeitraums aus einer Vielzahl historischer Zeiträume aufgezeichnet wurde.

18. Computerimplementiertes System, das die Infrastrukturbeleuchtung dynamisch steuert, wobei das System **dadurch gekennzeichnet ist, dass**:
ein oder mehrere Computerprozessoren konfiguriert sind zum:
Empfangen von Verkehrsintensitätsdaten und Bestimmen einer Verkehrsintensität (60) an einem bestimmten Infrastrukturabschnitt (65) gemäß den empfangenen Verkehrsintensitätsdaten;
Empfangen eines maximalen Leuchtstärkewerts, der einer oder mehreren Beleuchtungsvorrichtungen (70) zugewiesen ist, die dazu konfiguriert sind, den bestimmten Infrastrukturabschnitt (65) gemäß der Verkehrsintensität (60) zu beleuchten;
Vergleichen der bestimmten Verkehrsintensität (60) an dem bestimmten Infrastrukturabschnitt (65) mit der Verkehrsintensität, in Bezug auf welche der maximale Leuchtstärkewert gilt, um eine relative Verkehrsintensität (75) zu bestimmen; und
Betreiben, im Wesentlichen in Echtzeit, von Anweisungen an ein Lichtmanagementsystem (80), um die Beleuchtung der einen oder mehreren Beleuchtungsvorrichtungen (70) zu steuern, wobei das Lichtmanagementsystem (80) die Beleuchtung steuert, wobei die bestimmte relative Verkehrsintensität (75) als Referenzparameter verwendet wird.

19. Nichtflüchtiges computerlesbares Medium, das Computeranweisungscode umfasst, **dadurch gekennzeichnet, dass** der Computeranweisungscode, wenn er ausgeführt wird, einen oder mehrere Prozessoren dazu veranlasst, die folgenden Schritte durchzuführen:
Empfangen von Verkehrsintensitätsdaten und Bestimmen einer Verkehrsintensität (60) an einem bestimmten Infrastrukturabschnitt (65) gemäß den empfangenen Verkehrsintensitätsdaten;
Vergleichen der bestimmten Verkehrsintensität (60) an dem bestimmten Infrastrukturabschnitt (65) mit einer vorbestimmten Verkehrsintensität für den bestimmten Infrastrukturabschnitt (65), um eine relative Verkehrsintensität (75) zu bestimmen, wobei die vorbestimmte Verkehrsintensität eines oder mehrere der Folgenden umfasst:
eine Verkehrsintensität, die mit einem maximalen Leuchtstärkewert verbunden ist, der einer oder mehreren Beleuchtungsvorrichtungen (70) zugewiesen ist, die zum Beleuchten des bestimmten Infrastrukturabschnitts (65) verwendet werden; oder
eine maximale Verkehrsintensität, die an dem bestimmten Infrastrukturabschnitt (65) während eines bestimmten Zeitraums aus einer Vielzahl historischer Zeiträume aufgezeichnet wurde; und
Betreiben, im Wesentlichen in Echtzeit, eines Lichtmanagementsystems (80), das die Beleuchtung der einen oder mehreren Beleuchtungsvorrichtungen (70) steuert, wobei das Lichtmanagementsystem (80) eine Beleuchtung der einen oder mehreren Beleuchtungsvorrichtungen (80) anpasst, wobei die bestimmte relative Verkehrsintensität (75), die für den bestimmten Infrastrukturabschnitt (65) relevant ist, als Referenzparameter verwendet wird.

## Revendications

1. Procédé mis en œuvre par ordinateur de commande dynamique de l'éclairage d'une infrastructure, le procédé étant **caractérisé en ce qu'**il comprend :
la réception, par un ou plusieurs processeurs (20), de données d'intensité de trafic et la détermination d'une intensité de trafic (60) au niveau d'une section particulière d'infrastructure (65) en fonction des données d'intensité de trafic reçues ;
la comparaison, par un ou plusieurs processeurs (20), de l'intensité de trafic (60) déterminée au niveau de la section particulière d'infrastructure (65) avec une intensité de trafic prédéterminée pour la section particulière d'infrastructure afin de déterminer une intensité de trafic relative (75) ; et
l'exploitation, par un ou plusieurs processeurs (20), d'un système de gestion de l'éclairage (80) apte à commander l'éclairage du ou des dispositifs d'éclairage (70) sensiblement en temps réel afin d'ajuster l'éclairage du ou des dispositifs d'éclairage (70), l'intensité de trafic relative (75) déterminée étant utilisée comme paramètre de référence ;
**caractérisé en ce que**,
l'intensité de trafic prédéterminée comprend un ou plusieurs parmi :
une intensité de trafic associée à une valeur de luminosité maximale attribuée à un ou plusieurs dispositifs d'éclairage (70) utilisés pour éclairer la section particulière d'infrastructure (65) ; ou
une intensité de trafic maximale enregistrée au niveau de la section particulière d'infrastructure (65) pendant une période de temps particulière d'une pluralité de périodes de temps historiques.

2. Procédé mis en œuvre par ordinateur selon la revendication 1, dans lequel l'exploitation du système de gestion de l'éclairage (80) comprend l'émission d'une ou plusieurs commandes d'augmentation ou de diminution de l'éclairage et la transmission de celles-ci au ou aux dispositifs d'éclairage (65) sensiblement en temps réel.

3. Procédé mis en œuvre par ordinateur selon l'une quelconque de la revendication 1 ou de la revendication 2, dans lequel le procédé comprend en outre :
la réception, par un ou plusieurs processeurs, de données provenant d'une ou plusieurs sources supplémentaires, et
l'exploitation du système de gestion de l'éclairage (80) afin d'ajuster l'éclairage existant du ou des dispositifs d'éclairage (65) en fonction de l'intensité de trafic relative (75) déterminée et des données reçues d'une ou plusieurs sources supplémentaires.

4. Procédé mis en œuvre par ordinateur selon la revendication 3, dans lequel les données provenant de la ou des sources supplémentaires comprennent des données relatives à un ou plusieurs parmi :
les conditions de lumière naturelle dominantes recueillies et rapportées sensiblement en temps réel concernant une ou plusieurs sections d'infrastructure ;
des commandes reçues d'un ou plusieurs dispositifs utilisateur (50), comprenant des instructions pour fournir un éclairage le long d'un trajet de déplacement anticipé de l'utilisateur (30) ;
l'envoi d'un véhicule d'urgence, comprenant des informations relatives à la destination prévue et/ou au trajet de déplacement anticipé du véhicule d'urgence ;
des données de capteurs de surveillance environnementale comprenant des informations relatives à des alertes climatiques et/ou à des prévisions susceptibles d'affecter l'éclairage général et la visibilité le long d'une ou plusieurs sections d'infrastructure ; et
des facteurs astronomiques attendus comprenant des informations relatives à des facteurs susceptibles d'affecter l'éclairage général et la visibilité le long d'une ou plusieurs sections d'infrastructure.

5. Procédé mis en œuvre par ordinateur selon la revendication 4, dans lequel le trajet de déplacement anticipé soit d'un véhicule d'urgence soit d'un utilisateur est un ou plusieurs parmi :
un trajet de déplacement qui est prédéfini ; ou
un trajet de déplacement déterminé sensiblement en temps réel en fonction du suivi, sensiblement en temps réel, de la géolocalisation du dispositif utilisateur (50) et/ou du véhicule d'urgence.

6. Procédé mis en œuvre par ordinateur selon l'une quelconque des revendications précédentes, dans lequel :
les données d'intensité de trafic identifient une pluralité de mesures d'intensité de trafic capturées pendant une période de temps récente, la période de temps récente étant définie par un intervalle de temps prédéterminé,
la pluralité de mesures d'intensité de trafic capturées pendant la période de temps récente est agrégée afin de générer une mesure unique d'intensité de trafic (60), et
l'intensité de trafic relative (75) est déterminée concernant la période de temps récente en tant que pourcentage de l'intensité de trafic pour laquelle la luminosité maximale s'applique.
6.Procédé mis en œuvre par ordinateur selon l'une quelconque des revendications précédentes, dans lequel :
les données d'intensité de trafic identifient une pluralité de mesures d'intensité de trafic capturées pendant une période de temps récente, la période de temps récente étant définie par un intervalle de temps prédéterminé,
la pluralité de mesures d'intensité de trafic capturées pendant la période de temps récente est agrégée afin de générer une mesure unique d'intensité de trafic (60), et
l'intensité de trafic relative (75) est déterminée concernant la période de temps récente en tant que pourcentage de l'intensité de trafic pour laquelle la luminosité maximale s'applique.

7. Procédé mis en œuvre par ordinateur selon la revendication 6, dans lequel la valeur de luminosité maximale attribuée au ou aux dispositifs d'éclairage (70) est conforme à une exigence réglementaire applicable à la section particulière d'infrastructure (65) pour un intervalle de temps particulier.

8. Procédé mis en œuvre par ordinateur selon l'une quelconque des revendications 1 à 5, dans lequel :
les données d'intensité de trafic identifient une pluralité de mesures d'intensité de trafic capturées pendant une période de temps récente, la période de temps récente étant définie par un intervalle de temps prédéterminé,
la pluralité de mesures d'intensité de trafic capturées pendant la période de temps récente est agrégée afin de générer une mesure unique d'intensité de trafic (60), et
l'intensité de trafic relative (75) est déterminée concernant la période de temps récente en tant que pourcentage de l'intensité de trafic maximale enregistrée.

9. Procédé mis en œuvre par ordinateur selon l'une quelconque des revendications précédentes, dans lequel l'intensité de trafic (60) comprend un comptage du nombre de piétons et/ou de véhicules (67) traversant la section d'infrastructure (65), dans lequel la détermination du nombre de piétons et/ou de véhicules (67) est facilitée par l'utilisation d'une ou plusieurs techniques d'intelligence artificielle afin d'identifier si un objet en mouvement est un piéton et/ou un véhicule (67) de passage.

10. Procédé mis en œuvre par ordinateur selon l'une quelconque des revendications précédentes, dans lequel les instructions transmises au système de gestion de l'éclairage (80) spécifient un niveau d'éclairage à appliquer au ou aux dispositifs d'éclairage (70) sensiblement en temps réel, comprenant :
une commande pour augmenter un éclairage existant du ou des dispositifs d'éclairage (70) afin d'atteindre un éclairage spécifié ; ou
une commande pour diminuer un éclairage existant du ou des dispositifs d'éclairage (70) afin d'atteindre un éclairage spécifié.

11. Procédé mis en œuvre par ordinateur selon l'une quelconque des revendications précédentes, dans lequel l'exploitation du système de gestion de l'éclairage (80) entraîne l'application de niveaux particuliers d'éclairage en fonction de l'intensité de trafic relative (75) déterminée comme se situant dans une plage prédéterminée d'intensités.

12. Procédé mis en œuvre par ordinateur selon la revendication 11, dans lequel :
lorsque l'intensité de trafic relative (75) est déterminée comme étant inférieure à 25% de l'intensité de trafic prédéterminée, le ou les dispositifs d'éclairage (70) sont amenés à éclairer à 30 % de la capacité d'éclairage maximale ;
lorsque l'intensité de trafic relative (75) est déterminée comme étant comprise entre 25 % et 50 % de l'intensité de trafic prédéterminée, le ou les dispositifs d'éclairage (70) sont amenés à éclairer à 70 % de la capacité d'éclairage maximale ; et
lorsque l'intensité de trafic relative (75) est déterminée comme étant supérieure à 50% de l'intensité de trafic prédéterminée, le ou les dispositifs d'éclairage (70) sont amenés à éclairer à 100 % de la capacité d'éclairage maximale.

13. Procédé mis en œuvre par ordinateur selon l'une quelconque des revendications précédentes, dans lequel :
les données d'intensité de trafic sont reçues d'un ou plusieurs capteurs de trafic (55) associés à la section particulière d'infrastructure (65), et
le ou les capteurs de trafic (55) utilisent des techniques de reconnaissance d'images pour surveiller l'intensité de trafic (60) en fonction du traitement d'images fixes et/ou animées concernant la section d'infrastructure (65).

14. Procédé mis en œuvre par ordinateur selon l'une quelconque des revendications précédentes, dans lequel les communications vers et depuis le système de gestion de l'éclairage (80) et/ou le ou les dispositifs d'éclairage (70), comprenant un retour provenant de ceux-ci concernant un état d'éclairage actuel de chacun du ou des dispositifs d'éclairage (70), sont effectuées à l'aide d'une interface de programmation d'application API.

15. Procédé mis en œuvre par ordinateur selon l'une quelconque des revendications précédentes, dans lequel le ou les dispositifs d'éclairage (70) comprennent des unités de commande d'éclairage reliées de manière fonctionnelle au(x) dispositif(s) d'éclairage (70), qui permettent d'ajuster la sortie d'éclairage du ou des dispositifs d'éclairage (70) lorsque l'unité de commande d'éclairage reçoit des instructions du système de gestion de l'éclairage (80) pour ajuster l'éclairage du ou des dispositifs d'éclairage (70).

16. Procédé mis en œuvre par ordinateur selon l'une quelconque des revendications précédentes, dans lequel une pluralité de sections d'infrastructure (65) sont reliées de manière fonctionnelle à une pluralité de systèmes de gestion de l'éclairage (80) qui comprennent différents systèmes informatiques électroniques pour ajuster l'éclairage du ou des dispositifs d'éclairage (70) et différentes connectivités entre les systèmes de gestion de l'éclairage (80) et les systèmes informatiques électroniques, le procédé étant interopérable à l'égard de l'un quelconque de la pluralité de systèmes de gestion de l'éclairage (80) exploités pour ajuster l'éclairage du ou des dispositifs d'éclairage (70) reliés de manière fonctionnelle à ceux-ci.

17. Système mis en œuvre par ordinateur qui commande dynamiquement l'éclairage d'une infrastructure, le système comprenant :
un ou plusieurs processeurs informatiques configurés pour :
recevoir des données d'intensité de trafic et déterminer une intensité de trafic (60) au niveau d'une section particulière d'infrastructure (65) en fonction des données d'intensité de trafic ;
comparer l'intensité de trafic (60) déterminée au niveau de la section particulière d'infrastructure (65) avec une intensité de trafic prédéterminée pour la section particulière d'infrastructure (65) afin de déterminer une intensité de trafic relative (75) ; et
exploiter un système de gestion de l'éclairage (80) apte à commander l'éclairage du ou des dispositifs d'éclairage (70) sensiblement en temps réel afin d'ajuster l'éclairage du ou des dispositifs d'éclairage (70), l'intensité de trafic relative (75) déterminée étant utilisée comme paramètre de référence ;
**caractérisé en ce que**
l'intensité de trafic prédéterminée comprend un ou plusieurs parmi :
une intensité de trafic associée à une valeur de luminosité maximale attribuée à un ou plusieurs dispositifs d'éclairage (70) utilisés pour éclairer la section particulière d'infrastructure (65) ; ou
une intensité de trafic maximale enregistrée au niveau de la section particulière d'infrastructure (65) pendant une période de temps particulière d'une pluralité de périodes de temps historiques.

18. Système mis en œuvre par ordinateur qui commande dynamiquement l'éclairage d'une infrastructure, le système étant **caractérisé en ce que** :
un ou plusieurs processeurs informatiques sont configurés pour :
recevoir des données d'intensité de trafic et déterminer une intensité de trafic (60) au niveau d'une section particulière d'infrastructure (65) en fonction des données d'intensité de trafic reçues ;
recevoir une valeur de luminosité maximale attribuée à un ou plusieurs dispositifs d'éclairage (70) configurés pour éclairer la section particulière d'infrastructure (65) en fonction de l'intensité de trafic (60) ;
comparer l'intensité de trafic (60) déterminée au niveau de la section particulière d'infrastructure (65) avec l'intensité de trafic à l'égard de laquelle la valeur de luminosité maximale s'applique afin de déterminer une intensité de trafic relative (75) ; et
exploiter, sensiblement en temps réel, des instructions destinées à un système de gestion de l'éclairage (80) afin de commander l'éclairage du ou des dispositifs d'éclairage (70), le système de gestion de l'éclairage (80) commandant l'éclairage, l'intensité de trafic relative (75) déterminée étant utilisée comme paramètre de référence.

19. Support non transitoire lisible par ordinateur comprenant un code d'instructions informatiques **caractérisé en ce que**, lorsqu'il est exécuté, le code d'instructions informatiques amène un ou plusieurs processeurs à effectuer les étapes consistant à :
recevoir des données d'intensité de trafic et déterminer une intensité de trafic (60) au niveau d'une section particulière d'infrastructure (65) en fonction des données d'intensité de trafic reçues ;
comparer l'intensité de trafic (60) déterminée au niveau de la section particulière d'infrastructure (65) avec une intensité de trafic prédéterminée pour la section particulière d'infrastructure (65) afin de déterminer une intensité de trafic relative (75), dans lequel l'intensité de trafic prédéterminée comprend un ou plusieurs parmi :
une intensité de trafic associée à une valeur de luminosité maximale attribuée à un ou plusieurs dispositifs d'éclairage (70) utilisés pour éclairer la section particulière d'infrastructure
(65) ; ou
une intensité de trafic maximale enregistrée au niveau de la section particulière d'infrastructure (65) pendant une période de temps particulière d'une pluralité de périodes de temps historiques ; et
exploiter, sensiblement en temps réel, un système de gestion de l'éclairage (80) commandant l'éclairage du ou des dispositifs d'éclairage (70), le système de gestion de l'éclairage (80) ajustant un éclairage du ou des dispositifs d'éclairage (80), l'intensité de trafic relative (75) déterminée pertinente pour la section particulière d'infrastructure (65) étant utilisée comme paramètre de référence.
